# EUROPÄISCHE PATENTSCHRIFT

(11) **EP 1 355 560 B1**
(45) Veröffentlichungstag und Bekanntmachung des Hinweises auf die Patenterteilung: **15.09.2004**
(21) Anmeldenummer: 02706658.8
(22) Anmeldetag: 31.01.2002
(51) Int. Cl.: A47L 15/24

(54) **GEWERBLICHE SPÜLMASCHINE**
INDUSTRIAL DISHWASHER
LAVE-VAISSELLE INDUSTRIEL

(30) Priorität: 31.01.2001 DE 10104509; 14.02.2001 DE 10107108; 11.05.2001 DE 10122927
(43) Veröffentlichungstag der Anmeldung: 29.10.2003
(73) Patentinhaber: WINTERHALTER GASTRONOM GMBH, 88074 Meckenbeuren (DE)
(72) Erfinder: DUDEN, Roman, 88048 Friedrichshafen (DE); SINGER, Ralf, 88361 Altshausen (DE)
(74) Vertreter: Appelt, Christian W.
(86) Internationale Anmeldenummer: PCT/DE2002/000348
(87) Internationale Veröffentlichungsnummer: WO 2002/060310

(56) Entgegenhaltungen:
- DE-A- 2 712 020
- DE-C- 738 312
- GB-A- 2 030 446
- US-A- 3 598 131
- US-A- 3 789 860

## Beschreibung

Die Erfindung betrifft eine gewerbliche Spülmaschine nach dem Oberbegriff des Anspruchs 1.

Derartige gewerbliche Spülmaschinen leisten in der Regel etwa 30 bis 200 Arbeitszyklen pro Tag, wobei ein Arbeitszyklus etwa 1 bis 2 Minuten dauert. Im Gegensatz hierzu ist eine Haushaltsspülmaschine nur etwa 1 bis 3 mal pro Tag im Einsatz, wobei hier die Spüldauer etwa 1 Stunde beträgt. Bei bekannten gewerblichen Spülmaschinen umfasst ein Arbeitszyklus in der Regel einen Waschgang, einen Spülgang und einen sogenannten Trockenvorgang. Ein Öffnen der gewerblichen Spülmaschine nach dem Trockenvorgang zur Entnahme des Spülguts führt dazu, dass der während des Trockenvorgangs im Spülraum gebildete Wasserdampf in die Umgebung entweicht. Nachteilig hieran ist, dass in dem Arbeitsraum, in dem die Spülmaschine steht, ein feucht-heißes Klima entsteht, das mit jedem Arbeitszyklus der Spülmaschine extremer wird. Weiterhin wird bei jedem Öffnen der Spülmaschine nach dem Trockenvorgang eine große Menge Energie freigesetzt, die nicht für weitere Arbeitszyklen zur Verfügung steht.

Aus der GB 2 030 446 A ist eine kontinuierlich arbeitende Spülmaschine bekannt, bei der auf einer Seite Spülgut aufgegeben wird, das über ein Förderband durch die gesamte Spülmaschine transportiert wird, so daß es nach dem Spülvorgang auf der anderen Seite ausgegeben wird. Diese Druckschrift offenbart ferner eine Absaugvorrichtung zum Absaugen von heißer, feuchter Luft, wobei diese Luft in einer Wärmetauschervorrichtung gekühlt und entfeuchtet wird, woraufhin sie in die Umgebung als Abluft abgegeben wird.

Es ist eine Aufgabe der vorliegenden Erfindung, eine gewerbliche Spülmaschine zur Verfügung zu stellen, bei der auf möglichst effiziente Weise die Bildung eines feucht-heißen Klimas in der Umgebung vermieden wird, gleichzeitig jedoch ein effektiver Trockenvorgang ermöglicht wird. Es ist ferner Aufgabe der vorliegenden Erfindung, ein entsprechendes Verfahren zur Verfügung zu stellen.

Diese Aufgabe wird durch eine gewerbliche Spülmaschine gemäß Anspruch 1 und ein Verfahren gemäß Anspruch 16 gelöst. Die Ansprüche 2 bis 15 betreffen besonders vorteilhafte Ausführungsformen der erfindungsgemäßen Spülmaschine gemäß Anspruch 1.

Weitere Einzelheiten der Erfindung werden in der Zeichnung anhand von schematisch dargestellten Ausführungsbeispielen beschrieben.

Hierbei zeigt:
- Figur 1: eine schematische Darstellung einer gewerblichen Spülmaschine mit einem Luftkreislauf und
- Figur 2: eine schematische Darstellung einer weiteren gewerblichen Spülmaschine mit einem Luftkreislauf.

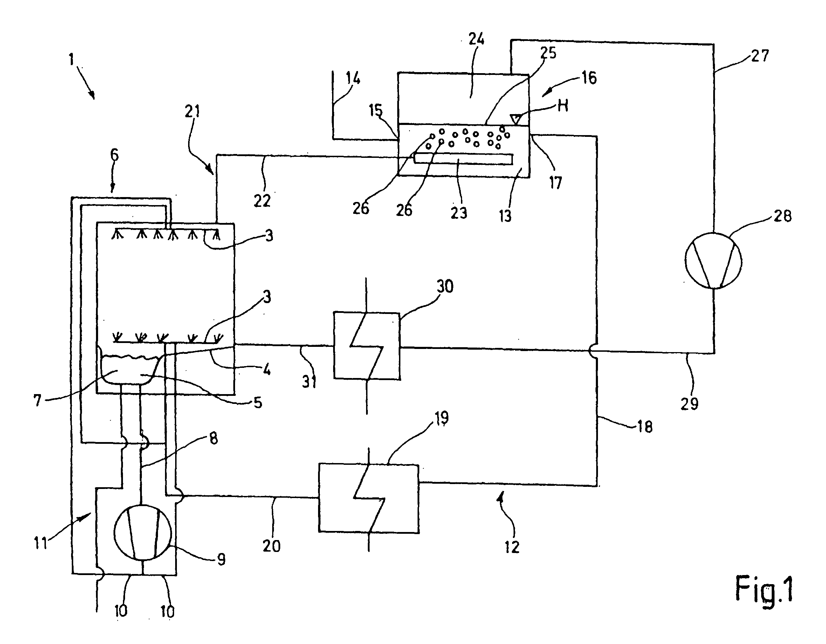

In Figur 1 ist eine gewerbliche Spülmaschine 1 in einer schematischen Ansicht dargestellt. Die Spülmaschine 1 umfasst im Wesentlichen einen Spülraum 2, in dem nicht dargestelltes Spülgut angeordnet ist, einen Wasserkreislauf 6, einen Wasserzulauf 12, einen Wasserablauf 11 und einen Luftkreislauf 21. Ein vollständiger Arbeitszyklus der Spülmaschine 1 besteht im Wesentlichen aus drei aufeinander folgenden Zyklen. Dies sind Waschzyklus, Nachspülzyklus und Trockenzyklus. Am Waschzyklus ist hauptsächlich der Wasserkreislauf 6 beteiligt, der Nachspülzyklus wird im Wesentlichen durch den Wasserzulauf 12 ausgeführt und beim Trockenzyklus arbeiten der Wasserzulauf 12 und der Luftkreislauf 21 zusammen. Das Spülgut ist im Spülraum 2 zwischen Wascharmen 3 angeordnet. Unterhalb des Spülguts und der Wascharme 3 ist eine Wanne 4 angeordnet, welche im Spülraum 2 vorhandenes Wasser in einen Tank 5 leitet. Der Tank 5 gehört zu dem Wasserkreislauf 6, in dem das für einen Waschvorgang benötigte Waschwasser 7 umgewälzt wird. Während des Waschvorgangs wird dem Tank 5 über eine Leitung 8 Wasser entnommen und zu einer Pumpe 9 geführt. Von der Pumpe 9 wird das Waschwasser 7 über Leitungen 10 zu den Wascharmen 3 geführt und von diesem in den Spülraum 2 eingesprüht. Im Spülraum 2 läuft das Waschwasser 7 dann über die Wanne 4 wieder in den Tank 5. Im Wasserkreislauf 6 befinden sich noch weitere nicht dargestellte Komponenten wie z.B. eine Einrichtung für die Waschmittelzugabe, eine Heizung zur Erhitzung des Waschwassers, eine Reinigungseinrichtung für das Waschwasser und Sensoren. Mit dem Tank 5 steht weiterhin ein Wasserablauf 11 in Verbindung, über den Waschwasser 7 ableitbar ist. Beispielsweise wird nach jedem Waschzyklus ein Teil des Waschwassers 7 über den Wasserablauf 11 abgeleitet. Ein Auffüllen des Tanks 5 erfolgt mit Hilfe des Wasserzulaufs 12, der Nachspülwasser 13 zur Verfügung stellt, das nach dem Nachspülvorgang über die Wanne 4 dem Tank 5 zugeführt wird. Der Wasserzulauf 12 ist über eine Leitung 14 an eine nicht dargestellte Wasserquelle angeschlossen. Die Leitung 14 führt über einen Zulauf 15 in einen Entfeuchter 16, der bis zu einer Höhe H mit Wasser 13 gefüllt ist. Über einen Ablauf 17 ist der Entfeuchter 16 mittels einer Leitung 18 mit einem Heizelement 19 verbunden, welches das Wasser 13 auf eine Temperatur von etwa 65° C bis 85° C aufheizt. Vom Heizelement 19 wird das aufgeheizte Nachspülwasser 13 während des Nachspülzyklus durch eine Leitung 20 zu den Wascharmen 3 geführt, über die es auf das Spülgut verteilt wird. Das Waschwasser wird über die Wascharme 3 durch Waschdüsen im Spülraum verteilt.

Gemäß einer nicht dargestellten Ausführungsvariante erfolgt die Verteilung des Nachspülwassers über Nachspülarme und/oder Nachspüldüsen, wobei es sich bei Wascharmen und Nachspülarmen bzw. bei Waschdüsen und Nachspüldüsen um unterschiedliche Bauteile handelt. Somit erfolgt der Waschzyklus und der Nachspülzyklus gemäß der nicht dargestellten Ausführungsvariante über zwei getrennte Systeme.

Wie oben bereits beschrieben, wird das Nachspülwasser 13 über die Wanne 4 dem Tank 5 zugeführt und wird somit zu Waschwasser 7. Weiterhin umfasst die Spülmaschine 1 den Luftkreislauf 21, der während eines Trocknungszyklus aktiv ist. Über eine Leitung 22 ist der Spülraum 3 mit dem Entfeuchter 16 verbunden, wobei die Leitung 22 zu einem Verteiler 23 geführt ist, der im Innenraum 24 des Entfeuchters 16 unterhalb eines Wasserspiegels 25 angeordnet ist. Luft 26, die in der Leitung 22 vom Spülraum 2 zum Entfeuchter 16 geführt ist, tritt aus dem Verteiler 23 aus und wird aus dem Entfeuchter 16 über eine Luftleitung 27 zu einem Ventilator 28 geführt, der für eine Strömung der Luft 26 im Urzeigersinn durch den Luftkreislauf 21 sorgt. Der Ventilator 28 ist über eine Luftleitung 29 mit einer Heizung 30 verbunden, in der die Luft 26 aufgeheizt wird, bevor sie durch die Luftleitung 31 in den Spülraum 2 eintritt, diesen durchströmt und über die Luftleitung 22 wieder verlässt. Im Folgenden wird der Trockenzyklus nochmals detailliert beschrieben. Nach dem Spülzyklus wird die feuchte übersättigte Luft (ca. 60° C, ca. 100 % relative Luftfeuchtigkeit bzw. absolute Luftfeuchtigkeit ca. 160 g/kg) aus dem Spülraum 2 über die Luftleitung 22 angesaugt und im Entfeuchter 16 entfeuchtet bzw. abgekühlt. Die Entfeuchtung bzw. Abkühlung erfolgt durch einen direkten Kontakt der Luft 26 mit dem kalten Nachspülwasser 13, in welchem die Luft 26 aufsteigt. Die entfeuchtete und abgekühlte Luft (ca. 30° C, ca. 100 % relative Luftfeuchtigkeit bzw. ca. 30 g/kg absolute Luftfeuchtigkeit) wird dem Entfeuchter 16 über die Luftleitung 27 entnommen und durch den Ventilator 28 über die Luftleitung 29 in die Heizung 30 geblasen. Hier wird die Luft auf ca. 140° C erhitzt (ca. 1,2 % relative Luftfeuchtigkeit bzw. ca. 30 g/kg absolute Luftfeuchtigkeit) und über die Luftleitung 31 in den Spülraum 2 geblasen. Im Spülraum 2 vermischt sich diese Luft mit der übersättigten im Spülraum vorhandenen Luft und wird somit gesättigt. Über dem Luftkreislauf 21 kann die Luft 26 je nach Bedarf ein oder mehrmals umgewälzt und somit entfeuchtet werden. Über den als Wärmetauscher ausgebildeten Entfeuchter 16, in welchem die Luft gekühlt wird, wird das Frischwasser 13, welches für jeden Nachspülzyklus benötigt wird, vorgeheizt. Das Frischwasser 13 dient als Kühlmedium für die Luft 26. Diese im Entfeuchter 16 stattfindende Vorheizung des Frischwassers 13 erfolgt, bevor dieses in der als Boiler ausgebildeten Heizung 19 auf etwa 65° C (für Gläserspülmaschinen) bzw. 85° C (für Geschirrspülmaschinen) aufgeheizt wird. Die Anordnung des Ventilators 28 im Luftkreislauf 21 kann zwischen Spülraum 2 und Entfeuchter 16 oder Entfeuchter 16 und Heizung 30 oder Heizung 30 und Spülraum 2 erfolgen. Für den Trockenzyklus sind etwa 2 Minuten vorgesehen. Gemäß einer Ausführungsvariante läuft der Ventilator 28 auch nach Abschluss des Trockenzyklus bei abgeschalteter Heizung 30 weiter. Hierdurch wird ein Trocknungs- bzw. Kühlungseffekt des sich im Spülraum 2 befindlichen Spülguts erzielt. Um die aus der feuchten Trocknungsluft 26 gewonnene Energie optimal für den folgenden Arbeitszyklus der Spülmaschine 1 zu erhalten, ist es vorgesehen, den Entfeuchter 16, die Leitungen 27, 29 und das Gebläse 28 zu isolieren.

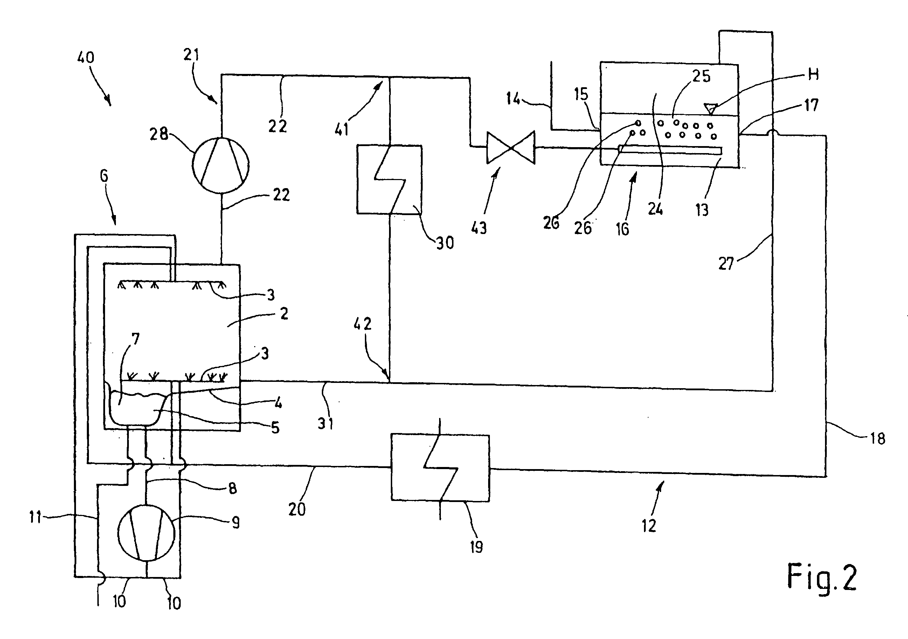

In Figur 2 ist eine Variante der in Figur 1 dargestellte gewerblichen Spülmaschine 1 dargestellt. Die in Figur 2 dargestellte Spülmaschine 40 unterscheidet sich von der in Figur 1 dargestellten Spülmaschine 1 durch eine Parallelschaltung der Heizung 30 und des Entfeuchters 16 im Luftkreislauf 21. Der Luftstrom, welcher den Spülraum 2 über die Luftleitung 22 verlässt, wird an einem Gabelpunkt 41 aufgeteilt. Ein Teil des Luftstroms wird durch den Entfeuchter 16 geführt und hier entfeuchtet und abgekühlt auf ca. 30° C und ca. 100 % relative Luftfeuchtigkeit bzw. ca. 30 g/kg absolute Luftfeuchtigkeit. Der andere Teil wird über die Heizung 30 geführt und dort auf ca. 140° C aufgeheizt (ca. 5,4 % relative Luftfeuchtigkeit bzw. ca. 160 g/kg absolute Luftfeuchtigkeit). Die beiden Luftströme werden an einem zweiten Gabelpunkt 42 wieder zusammengeführt. Hierbei ergibt sich unter der Voraussetzung, dass die Luftströme im Verhältnis 1:1 aufgeteilt wurden, eine Lufttemperatur von etwa 91° C bei 17 % relativer Luftfeuchtigkeit bzw. 96,5 g/kg absoluter Luftfeuchtigkeit. Diese gemischte Luft wird über die Luftleitung 31 wieder in der Spülraum 2 eingeblasen. Über ein vor dem Entfeuchter 16 angeordnetes Ventil 43 ist es möglich, das Mischungsverhältnis der beiden parallel laufenden Luftströme einzustellen.

Die Erfindung ist nicht auf dargestellte und beschriebene Ausführungsbeispiele beschränkt. Sie umfasst vielmehr Weiterbildungen der Erfindung im Rahmen der Schutzrechtsansprüche. Beispielsweise ist es vorgesehen, den Entfeuchter bzw. Wärmetauscher so auszubilden, dass die Medien Luft und Wasser in diesem keinen direkten Kontakt haben.

### Bezugszeichenliste:

- 1: Gewerbliche Spülmaschine 43 Ventil (für 21)
- 2: Spülraum
- 3: Wascharm
- 4: Wanne
- 5: Tank
- 6: Wasserkreislauf
- 7: Waschwasser
- 8: Leitung
- 9: Pumpe (für 6)
- 10: Leitung
- 11: Wasserablauf
- 12: Wasserzulauf
- 13: Nachspülwasser (Wasser)
- 14: Leitung
- 15: Zulauf
- 16: Entfeuchter
- 17: Ablauf
- 18: Leitung
- 19: Heizelement (für 12)
- 20: Leitung
- 21: Luftkreislauf
- 22: Luftleitung
- 23: Verteiler
- 24: Innenraum (von 16)
- 25: Wasserspiegel (von 16)
- 26: Luft
- 27: Luftleitung
- 28: Ventilator (für 21)
- 29: Luftleitung
- 30: Heizung (für 21)
- 31: Luftleitung
- 40: Spülmaschine
- 41: Gabelpunkt
- 42: Gabelpunkt

## Patentansprüche

1. Gewerbliche Spülmaschine (1, 40) mit einem Spülraum (2) mit wenigstens einem im wesentlichen geschlossenen Wasserkreislauf (6), in dem Waschwasser (7) umgewälzt wird, und wenigstens einem Wasserzulauf (12), der Nachspülwasser (13) zur Verfügung stellt, welches nach einem Nachspülvorgang, der auf einen Waschvorgang folgt, in den Wasserkreislauf (6) aufgenommen wird, **dadurch gekennzeichnet ist, daß** eine Vorrichtung zur Erzeugung eines Luftstroms zur Trocknung eines in dem Spülraum (2) angeordneten Spülguts vorgesehen ist, wobei die Spülmaschine so ausgebildet ist, daß dieser Luftstrom in einem geschlossenen Luftkreislauf zirkuliert und in einem Entfeuchter (16), der Nachspülwasser (13) enthält, entfeuchtet wird.

2. Spülmaschine nach Anspruch 1, **dadurch gekennzeichnet, dass** der Entfeuchter (16) als Direktwärmetauscher ausgebildet ist, in welchem sich die Medien (13, 26) mischen und entmischen.

3. Spülmaschine nach einem der vorhergehenden Ansprüche, **dadurch gekennzeichnet, dass** der Entfeuchter (16) insbesondere als Kühlregister, insbesondere als abgeschlossener Behälter mit Zulauf (15) und Ablauf (17) ausgebildet ist.

4. Spülmaschine nach einem der vorhergehenden Ansprüche, **dadurch gekennzeichnet, dass** der Entfeuchter (16) als Indirektwärmetauscher ausgebildet ist, welchen die Medien (13, 26) in geschlossenen Leitungssystemen durchströmen.

5. Spülmaschine nach einem der vorhergehenden Ansprüche, **dadurch gekennzeichnet, dass** der Luftkreislauf (21) aktiv ist, wenn der Wasserkreislauf (6) und/oder der Wasserzulauf (12) ruhen.

6. Spülmaschine nach einem der vorhergehenden Ansprüche, **dadurch gekennzeichnet, dass** der Luftkreislauf (21) insbesondere wenigstens einen Ventilator (28) und/oder insbesondere wenigstens ein Heizelement (30) und/oder insbesondere wenigstens ein Ventil (43) umfasst.

7. Spülmaschine nach einem der vorhergehenden Ansprüche, **dadurch gekennzeichnet, dass** der Entfeuchter (16) und das Heizelement (30) in Reihe im Luftkreislauf (21) angeordnet sind.

8. Spülmaschine nach einem der vorhergehenden Ansprüche, **dadurch gekennzeichnet, dass** der Entfeuchter (16) und das Heizelement (30) parallel zueinander im Luftkreislauf (21) angeordnet sind.

9. Spülmaschine nach einem der vorhergehenden Ansprüche, **dadurch gekennzeichnet, dass** der Luftkreislauf (21) als geschlossener und/oder offener Kreislauf ausgebildet ist und einen Spülraum (2) der Spülmaschine (1, 40) durchströmt.

10. Spülmaschine nach einem der vorhergehenden Ansprüche, **dadurch gekennzeichnet, dass** der Wasserzulauf (12) insbesondere wenigstens ein Heizelement (19) umfasst, das zwischen dem Entfeuchter (16) und dem Spülraum (2) angeordnet ist.

11. Spülmaschine nach einem der vorhergehenden Ansprüche, **dadurch gekennzeichnet, dass** der Wasserzulauf Wascharme (3) der Spülmaschine (1, 40) mit einer Frischwasserzufuhr verbindet.

12. Spülmaschine nach einem der vorhergehenden Ansprüche, **dadurch gekennzeichnet, dass** die Luft (26) des Luftkreislaufes (21) über einen im Entfeuchter (16) angeordneten Verteiler (23) in einen Innenraum (24) des Entfeuchters (16) eintritt und über eine oberhalb eines Wasserspiegels (25) angeordnete Öffnung aus dem Entfeuchter (16) austritt.

13. Spülmaschine nach einem der vorhergehenden Ansprüche, **dadurch gekennzeichnet, dass** das Wasser (13) des Wasserzulaufes (12) über einen Zulauf (15) in den Innenraum (24) des Entfeuchters (16) eintritt und über einen Ablauf (17) aus dem Innenraum (24) des Entfeuchters (16) austritt.

14. Spülmaschine nach einem der vorhergehenden Ansprüche, **dadurch gekennzeichnet, dass** das Wasser (13) des Wasserzulaufes (12) während des Betriebs des Luftkreislaufes (21) den Entfeuchter (16) bis zu einer Pegelhöhe (H) füllt und insbesondere langsam durchströmt.

15. Spülmaschine nach einem der vorhergehenden Ansprüche, **dadurch gekennzeichnet, dass** der Verteiler (23) unterhalb des Wasserspiegels (25) angeordnet ist.

16. Verfahren zum Spülen und Trocknen von Spülgut, das in einem Spülraum (2) angeordnet wird, wobei das Verfahren mindestens einen Waschvorgang, Spülvorgang und einen Trockenvorgang umfaßt, die nacheinander in dem Spülraum (2) durchgeführt werden, **dadurch gekennzeichnet, daß** während des Trocknungsvorgangs in dem Spülraum ein Luftstrom zur Trocknung des Spülgutes erzeugt wird, wobei die Luft in einem geschlossenen Luftkreislauf zirkuliert und in einem Entfeuchter (16) mittels eines darin befindlichen Vorrats an Nachspülwasser (13) für den Nachspülvorgang entfeuchtet wird.

## Claims

1. An industrial dishwashing machine (1, 40) having a washing compartment (2) with at least one essentially closed water circuit (6), in which washing water (7) is circulated, and with at least one water inflow (12) which makes available rinsing water (13) which is received into the water circuit (6) after a rinsing operation following a washing operation, **characterized in that** a device for generating an air stream for drying a batch arranged in the washing compartment (2) is provided, the dishwashing machine being designed in such a way that this air stream circulates in a closed air circuit and is dehumidified in a dehumidifier (16) which contains rinsing water (13).

2. The dishwashing machine as claimed in claim 1, **characterized in that** the dehumidifier (16) is designed as a direct heat exchanger in which the media (13, 26) are mixed and unmixed.

3. The dishwashing machine as claimed in one of the preceding claims, **characterized in that** the dehumidifier (16) is designed, in particular, as a cooling register, in particular as a closed-off container with an inflow (15) and an outflow (17).

4. The dishwashing machine as claimed in one of the preceding claims, **characterized in that** the dehumidifier (16) is designed as an indirect heat exchanger through which the media (13, 26) flow in closed line systems.

5. The dishwashing machine as claimed in one of the preceding claims, **characterized in that** the air circuit (21) is active when the water circuit (6) and/or the water inflow (12) is/are at rest.

6. The dishwashing machine as claimed in one of the preceding claims, **characterized in that** the air circuit (21) comprises, in particular, at least one fan (28) and/or, in particular, at least one heating element (30) and/or, in particular, at least one valve (43).

7. The dishwashing machine as claimed in one of the preceding claims, **characterized in that** the dehumidifier (16) and the heating element (13) are arranged in series in the air circuit (21).

8. The dishwashing machine as claimed in one of the preceding claims, **characterized in that** the dehumidifier (16) and the heating element (30) are arranged parallel to one another in the air circuit (21).

9. The dishwashing machine as claimed in one of the preceding claims, **characterized in that** the air circuit (21) is designed as a closed and/or open circuit and flows through a washing compartment (2) of the dishwashing machine (1, 40).

10. The dishwashing machine as claimed in one of the preceding claims, **characterized in that** the water inflow (12) comprises, in particular, at least one heating element (19) which is arranged between the dehumidifier (16) and the washing compartment (2).

11. The dishwashing machine as claimed in one of the preceding claims, **characterized in that** the water inflow connects washing arms (3) of the dishwashing machine (1, 40) to a freshwater supply.

12. The dishwashing machine as claimed in one of the preceding claims, **characterized in that** the air (26) of the air circuit (21) enters an interior (24) of the dehumidifier (16) via a distributor (23) arranged in the dehumidifier (16) and emerges from the dehumidifier (16) via an orifice arranged above a water level (25).

13. The dishwashing machine as claimed in one of the preceding claims, **characterized in that** the water (13) of the water inflow (12) enters the interior (24) of the dehumidifier (16) via an inflow (15) and emerges from the interior (24) of the dehumidifier (16) via an outflow (17).

14. The dishwashing machine as claimed in one of the preceding claims, **characterized in that**, during the operation of the air circuit (21), the water (13) of the water inflow (12) fills the dehumidifier (16) up to a level (H) and, in particular, flows through it slowly.

15. The dishwashing machine as claimed in one of the preceding claims, **characterized in that** the distributor (23) is arranged below the water level (25).

16. A method for the washing and drying of a batch which is arranged in a washing compartment (2), the method comprising at least a washing operation, a rinsing operation and a drying operation which are carried out in succession in the washing compartment (2), **characterized in that**, during the drying operation, an air stream for drying the batch is generated within the washing compartment, the air circulating in a closed air circuit and being dehumidified in a dehumidifier (16) by means of a supply of rinsing water (13) for the rinsing operation which is contained in said dehumidifier.

## Revendications

1. Lave-vaisselle (1, 40) industriel, avec une enceinte de rinçage (2), comprenant au moins un circuit d'eau (6) pratiquement fermé, dans lequel de l'eau de lavage (7) est mise en circulation, et au moins une amenée d'eau (12) mettant à disposition de l'eau de post-rinçage (13), qui, après un processus de post-rinçage, faisant suite à un processus de lavage, est captée dans le circuit d'eau (6), **caractérisé en ce qu'**un dispositif de production d'un écoulement d'air, pour le séchage d'un produit à rincer, disposé dans l'enceinte de rinçage (2), est prévu, le lave-vaisselle étant réalisé de manière que cet écoulement d'air circule en un circuit d'air fermé et soit déshumidifié dans un déshumidificateur (16), contenant l'eau de post-rinçage (13).

2. Lave-vaisselle selon la revendication 1, **caractérisé en ce que** le déshumidificateur (16) est réalisé sous la forme d'échangeur de chaleur direct, dans lequel les fluides (13, 26) se mélange et se ségréguent.

3. Lave-vaisselle selon l'une des revendications précédentes, **caractérisé en ce que** le déshumidificateur (16) est réalisé sous forme de registre de refroidissement, en particulier sous forme de récipient fermé, avec une amenée (15) et une évacuation (17).

4. Lave-vaisselle selon l'une des revendications précédentes, **caractérisé en ce que** le déshumidificateur (16) est réalisé sous la forme d'échangeur indirect, que traversent les écoulements de fluides (13, 26) passant dans des systèmes de conduite fermés.

5. Lave-vaisselle selon l'une des revendications précédentes, **caractérisé en ce que** le circuit d'air (21) est actif lorsque le circuit d'eau (16) et/ou l'amenée d'eau (12) est/sont hors service.

6. Lave-vaisselle selon l'une des revendications précédentes, **caractérisé en ce que** le circuit d'air comprend en particulier au moins un ventilateur (28) et/ou en particulier au moins un élément chauffant (30) et/ou en particulier au moins une soupape (43).

7. Lave-vaisselle selon l'une des revendications précédentes, **caractérisé en ce que** le déshumidificateur (16) et l'élément chauffant (30) sont disposés en série dans le circuit d'air (21).

8. Lave-vaisselle selon l'une des revendications précédentes, **caractérisé en ce que** le déshumidificateur (16) et l'élément chauffant (30) sont disposés en parallèle l'un par rapport à l'autre dans le circuit d'air (21).

9. Lave-vaisselle selon l'une des revendications précédentes, **caractérisé en ce que** le circuit d'air (21) est réalisé sous la forme de circuit fermé et/ou ouvert et son écoulement traverse une enceinte de rinçage (2) du lave-vaisselle (1, 40).

10. Lave-vaisselle selon l'une des revendications précédentes, **caractérisé en ce que** l'amenée d'eau (12) comprend en particulier au moins un élément chauffant (19), disposé entre le déshumidificateur (16) et l'enceinte de rinçage (2).

11. Lave-vaisselle selon l'une des revendications précédentes, **caractérisé en ce que** l'amenée d'eau relie des bras de lavage (3) du lave-vaisselle (1, 40) à une amenée d'eau neuve.

12. Lave-vaisselle selon l'une des revendications précédentes, **caractérisé en ce que** l'air (26) du circuit d'air (21) pénètre, par un distributeur (23) disposé dans le déshumidificateur (16), dans un espace intérieur (24) du déshumidificateur (16) et sort du déshumidificateur (16) par une ouverture ménagée au-dessus d'un niveau d'eau (25).

13. Lave-vaisselle selon l'une des revendications précédentes, **caractérisé en ce que** l'écoulement de l'eau (13) de l'amenée d'eau (12) pénètre par une amenée (15), dans l'espace intérieur (24) du déshumidificateur (16) et sort de l'espace intérieur (24) du déshumidificateur (16) par une évacuation (17).

14. Lave-vaisselle selon l'une des revendications précédentes, **caractérisé en ce que** l'écoulement de l'eau (13) de l'amenée d'eau (12), pendant le fonctionnement du circuit d'air (21), remplit le déshumidificateur (16) jusqu'à une hauteur de niveau (H) et, en particulier, le traverse lentement.

15. Lave-vaisselle selon l'une des revendications précédentes, **caractérisé en ce que** le distributeur (23) est disposé au-dessous du niveau d'eau (25).

16. Procédé de rinçage et séchage d'un produit à rincer, disposé dans une enceinte de rinçage (2), le procédé comprenant au moins un processus de lavage, un processus de rinçage et un processus de séchage, effectués les uns après les autres dans l'enceinte de rinçage (2), **caractérisé en ce que**, pendant le processus de séchage, dans l'enceinte de rinçage (2), un écoulement d'air est produit afin de sécher le produit à rincer, l'air circulant dans un circuit d'air fermé et étant déshumidifié dans un déshumidificateur (16), à l'aide d'une réserve, s'y trouvant, d'eau de post-rinçage (13), pour effectuer le processus de post-rinçage.
